# EUROPEAN PATENT SPECIFICATION

(11) **EP 2 651 664 B1**
(45) Date of publication and mention of the grant of the patent: **21.06.2017**
(21) Application number: 10807750.4
(22) Date of filing: 13.12.2010
(51) Int. Cl.: B60G 3/20, B60G 11/08

(54) **A WHEEL SUSPENSION, AND A MOTOR VEHICLE**
RADAUFHÄNGUNG UND KRAFTFAHRZEUG
SUSPENSION DE ROUE ET VÉHICULE À MOTEUR

(43) Date of publication of application: 23.10.2013
(73) Proprietor: Swedish Advanced Automotive Business AB, 462 41 Vänersborg (SE)
(72) Inventor: ROLAND, Magnus, S-462 41 Vänersborg (SE); BURÉNIUS, Gunnar, N-1332 Österås (NO)
(74) Representative: Berglund, Stefan
(86) International application number: PCT/SE2010/051369
(87) International publication number: WO 2012/082025

(56) References cited:
- WO-A1-2008/053034
- MAGNUS ROLAND: "TGD as Topological GeometroDynamics extended to Tire to Ground Dynamics", INTERNET CITATION, 16 June 2009 (2009-06-16), pages 1-60, XP007918649, Retrieved from the Internet: URL:http://www.vehicledynamics-expo.com/09 vdx_conf/pdfs/day1/12_Magnus_Roland.pdf [retrieved on 2011-05-13]

## Description

### FIELD OF THE INVENTION

The present invention refers generally to the suspension of a rear wheel of a motor vehicle, especially passenger cars, sport utilities (SUVs) and light trucks. More specifically, the present invention refers to a wheel suspension as defined in the pre-characterizing portion of claim 1. The present invention also refers to a motor vehicle having such a wheel suspension. A wheel suspension of this kind is disclosed in WO 2008/053034.

### BACKGROUND OF THE INVENTION AND RELATED ART

The wheel suspension for a motor vehicle connects the architecture of the sprung vehicle mass to the architecture of the non-sprung and rotating tire-wheel assemblies. Furthermore, the wheel suspension controls the motion pattern of the tire-wheel assemblies with respect to the external impact from the road as well as to the internal impact from the propelling, braking and steering as initiated by the driver through the engine-transmission system, the braking system, the steering system and the wheel suspensions.

The overall controllability in terms of steering, propelling and braking of the vehicle is closely related to the motion pattern of the four tire-wheel assemblies. The motions of the four tire-wheel assemblies are independently controlled by the respective suspension device of the wheel suspension. The four tire-wheel assemblies constitute the unsprung mass connected to the vehicle's sprung mass to which the driver is connected. During the vehicle's motion of combined forward running (surge), bounce, sway/veer, roll, pitch and yaw, these motion patterns and their time derivatives in all directions should be controlled such that a normal driver's capability of control enables the entire synthesized vehicle motion pattern to be fully controlled in a secure manner. To be noted is the fact that useful control signals and disturbing noise are superimposed and in addition to this, the objectively measurable disturbing noise frequently overpowers the useful control signal.

Vehicles are complex systems with human beings in the control loop. Although the dynamic behavior of vehicles in a response to drivers' input may be simulated or measured, this understanding does not determine the issue of 'good handling' unless complemented with the understanding of how human beings work as control systems and how a driver's brain works in vehicle control.

It is therefore important to provide a system mechanization with a synthesized operation of the communication loop defined as "fail operate, fail operate, fail safe" normally used in safety critical systems such as controlled configured airplanes. This requires a communication loop of quadruple redundancy and a dissimilar back up system, where the command media in our case is the entire vehicle-suspension architecture. The redundancy in the command media is here to be seen as flows of information of superimposed layers of power spectra where the driver's sensory system has capability to sense concurrently ongoing motion patterns in a similar way as our eye concurrently can perceive several colors or our ears concurrently can perceive several tones in music.

### SUMMARY OF THE INVENTION

The object of the present invention is to provide an improved wheel suspension for a motor vehicle. Especially it is aimed at a wheel suspension having a higher rigidity. More precisely, the object of the present invention is to provide a rear wheel suspension, which aims for maximized traction. Still more precisely, the object of the present invention is to provide a homogeneous contact pressure between the wheel, i.e. the tire, and the road. In addition, it is an object of the present invention to provide a vehicle, which aims for maximized human compatible control for normal as well as for critical unexpected events.

A further object of the present invention is to provide a wheel suspension permitting control of the structural bonding of the tire to road interaction and to control the different cross coupled inertia systems, which the vehicle is composed of.

A further object of the present invention is to meet a set of functions to maximize traction power at every particular driving condition and to maximize the compatibility to human capability to control the interaction between driver, vehicle and road at the limit of adhesion when the reciprocation of dipole bonding, as an extended view of Van der Waals forces, changes between structural intermolecular bonding and loss of this structural intermolecular bonding.

A further object of the present invention is to meet a set of functions to maximize traction power at every particular driving condition and to maximize the compatibility to human capability to control the interaction between driver, vehicle and road for driving conditions when sprung body inertia has an impact on the driver vehicle control loop as impacted by the means of cross coupled roll and yaw motion.

These and further objects are achieved by the wheel suspension initially defined, in which the control links form a virtual lower triangular link with a lower swing axis and a virtual upper triangular link with an upper swing axis, and which is characterized in that the lower swing axis and the upper swing axis form a second angle to each other in a plane of the longitudinal direction and the vertical direction, the second angle lying in the interval 1-8°, and that the lower swing axis and the upper swing axis both slope downwardly and rearwardly in relation to the longitudinal direction in the plane of the longitudinal direction and the vertical direction.

It has been proved that a configuration with intersecting camber links will contribute to an improved traction thanks to a wheel suspension securing a more homogeneous contact pressure between the wheel, i.e. the tire, and the road during various driving conditions. The structural bonding between the tire and the road will be enhanced ensuring a high traction power at every driving condition. In cases when the vehicle performance demanded by the driver cannot be supported by the structural bonding, this loss of traction will be moderated to a behavior compatible with driver control capability.

The motion of the wheel spindle housing defined by suspension kinematics in the vehicle coordinate system has a super ordinate and accurately defined topology of the control links such that an instantaneous center of motion for the design load configuration of the vehicle is located at a position far outside the wheel and then in the rear of the wheel spindle or at a position far inside the wheel and then in front of the wheel spindle. This is advantageous for a homogeneous contact pressure considering synchronization of the different degrees of freedom for suspension motions when exposed to vertical road impacts moving forward. This motion as a springing motion of the wheel and tire as defined by the wheel spindle housing relative motion to the body as defined by desired kinematics has a superimposed motion of rotation in the plane of the wheel and tire around the wheel spindle as a result of the longitudinal motion relative to the road. The choice of topology and instantaneous center of motion is such that these superimposed motions will coincide such that the tire to road contact will be given a homogeneous distribution of the stresses so as to maximize structural bonding and tire to road traction. Furthermore, the topology permits consideration to the requirements of a camber variation advantageous for driving through curves, which also will be compensated for by a toe variation, which is what was mentioned above as the relative to the body desired kinematics. For cornering and all other driving conditions the topology must provide a complex geometric function of instantaneous actions of motion for all suspension members of the wheel suspension. At any moment in time a vehicle with lateral acceleration follows a path defined by an instantaneous center of an arc in a road fixed coordinate system. The radius of that arc might be changing, but at any instant the path is a specific arc. The vehicle's tires with traction capability from structural bonding during micro-seconds demands synchronization of the traction power of the two tires, such that the instantaneous actions of motion of all different suspension members will coincide for the benefit of maximized structural bonding over the entire tire contact patch during the extremely short time of duration of Van der Waals forces with a common direction synchronized towards the vehicle's instantaneous turn center in a road fixed coordinate system. The above mentioned accurately defined topology of control links for the design load of the vehicle has complementary characteristics to adapt to all different levels of acceleration and paths of arcs such that the inner wheel would have a function of instantaneous center of motion to move into a location at a position far outside the wheel as seen in the vehicle coordinate system and then in front of the wheel center at suspension rebound while the outer wheel would have a function of instantaneous center of motion to move into a location at a position far inside the wheel as seen in the vehicle coordinate system and then in the front of the wheel center at suspension bump with the inner and the outer wheels' instantaneous centers of motion to converge directionally towards the vehicle's turn center as defined in a road fixed coordinate system. A drive joint center of the wheel may be located at a lateral distance from the frame structure along a lateral direction being perpendicular to the vertical direction and the longitudinal direction, wherein the instantaneous center of motion is located at a distance from the drive joint center that is significantly longer than said lateral distance.

It is to be noted that the wheel suspension according to the invention is suitable for vehicles, where the frame structure is connected to the vehicle body, e.g. vehicles having the engine at the front of the vehicle, and for vehicles, where the frame structure is directly connected to the engine-transmission system, e.g. vehicles having the engine and transmission at a position rear of the driver's location.

The first upper camber link is connected to the frame structure at a first camber frame position and the second upper camber link is connected to the frame structure at a second camber frame position, wherein the upper swing axis extends through the first camber frame position and the second camber frame position. The first camber frame position is located at a more forward position than the second camber frame position along the longitudinal direction with respect to the normal driving direction. The first camber housing position and the second camber housing position, along the longitudinal direction and the lateral direction, may enable controlling the motion of the rear wheel to be substantially parallel with the longitudinal direction when forward propelling forces are applied as well as when rearward braking forces are applied.

Furthermore, the trailing link is connected to the frame structure at a trailing link frame position and the lower rear link is connected to the frame structure at a lower rear link frame position, wherein the lower swing axis extends through the trailing link frame position and the lower rear link frame position. The trailing link frame position is located at a more forward position than the lower rear link frame position along the longitudinal direction with respect to the normal driving direction. Furthermore, the trailing link and the lower rear link both extend below the wheel spindle with respect to the vertical direction. This configuration contributes to lowest possible elasticity in the lateral direction from taking lateral loads as close as possible to the contact between the tire and the road with lowest possible chain of elasticity in the wheel suspension.

According to the invention, the lower swing axis and the upper swing axis both slope downwardly and rearwardly in relation to the longitudinal direction in the plane of the longitudinal direction and the vertical direction.

According to an embodiment, the lower swing axis slopes downwardly and rearwardly with a third angle in relation to the longitudinal axis in the plane of the longitudinal direction and the vertical direction, wherein the third angle lies in the interval 2-7°. Due to the sloping of the lower swing axis, the trailing link frame position is located at a higher position than the lower rear link frame position along the vertical direction.

According to a further embodiment, the upper swing axis slopes downwardly and rearwardly with a fourth angle in relation to the longitudinal axis in the plane of the longitudinal direction and the vertical direction, wherein the fourth angle lies in the interval 3-12°. Due to the sloping of the upper swing axis, the first camber frame position is located at a higher position than the second camber frame position along the vertical direction. This feature may also enable controlling the motion of the wheel center in the longitudinal direction in the rearward direction when the wheel spindle housing is moving upwards in the vertical direction.

According to a further embodiment, the trailing link and the lower rear link intersect in a common virtual lower point seen in the vertical direction, wherein a first line, extending perpendicularly from the lower swing axis and through the lower point, is turned during compression and prolongation of the vehicle spring in such away that the first line of the first suspension device remains approximately parallel with the first line of the second suspension device during driving of the vehicle. Thanks to this configuration, the first line of the first and second suspension devices converge directionally towards the vehicle's instantaneous turn center as defined in a road fixed coordinate system.

Furthermore, the first upper camber link and the second upper camber link intersect in a common virtual upper point seen in the vertical direction, wherein a second line, extending perpendicularly from the upper swing axis and through the upper point, may be turned during compression and prolongation of the vehicle spring in such away that the second line of the first suspension device remains approximately parallel with the second line of the second suspension device during driving of the vehicle. Thanks to this configuration, the second line of the first and second suspension devices converge directionally towards the vehicle's instantaneous turn center as defined in a road fixed coordinate system.

Still further, the toe link defines a third line, which extends perpendicularly, or substantially perpendicularly, to the upper and lower swing axes seen in the vertical direction and may be turned during compression and prolongation of the vehicle spring in such away that the third line of the first suspension device remains approximately parallel with the third line of the second suspension device during driving of the vehicle. Thanks to this configuration, the third line of the first and second suspension devices converge directionally towards the vehicle's instantaneous turn center as defined in a road fixed coordinate system.

According to a further embodiment, the vehicle spring is connected with the wheel spindle housing via a spring attachment, wherein the spring attachment is located rearwards the wheel spindle along the longitudinal direction with respect to the normal driving direction. Due to this configuration, the forwards directed trailing link is permitted to go from a preloaded condition during normal driving into a less loaded condition in the moment of road impact to the tire-wheel assembly, which effect will provide lowest possible structure borne noise from the suspension into the vehicle body from the principle of destructive interference.

According to a further embodiment, the spring attachment connects directly on the wheel spindle housing. By such a vehicle spring attachment the spring action is directly introduced into the wheel spindle housing carrying the wheel. The more direct action may thus enhance the suspension function.

According to a further embodiment, the vehicle spring acts on the wheel spindle housing via a push rod, wherein the vehicle spring is connected to the push rod via a pivoting connection member.

According to a further embodiment, the vehicle spring comprises or consists of a leaf spring extending transversely to the longitudinal direction with respect to the normal driving direction.

According to a further embodiment, the spring attachment comprises an attachment element having a first end connected and rotatable in relation to the wheel spindle housing and a second end connected and rotatable in relation to the vehicle spring. Advantageously, the spring attachment is configured to permit relative lateral motion between the vehicle spring and the wheel spindle housing when springing in the vertical direction.

According to a further embodiment, wherein the wheel suspension comprises a shock absorber which is attached to the wheel spindle housing via a shock absorber attachment, and wherein the shock absorber attachment is provided at a position which is located at a distance from the spring attachment and forwards the wheel spindle to be supported by the wheel spindle housing along the longitudinal direction with respect to the normal driving direction. This configuration contributes to meet a fast impact from the road, where the hydraulic characteristics of the shock absorber will generate a significant resistance by means of enabling the first and second camber links to go from a preloaded condition during normal driving into a less loaded condition in the moment of road obstacle impact to the tire-wheel assembly, which effect will provide lowest possible structure borne noise from the suspension into the vehicle body from the principle of destructive interference.

According to a further embodiment of the invention, the first upper camber link and the second upper camber link intersect each other seen in the longitudinal direction. It has been proved that also this configuration contributes to a wheel suspension securing a more homogeneous contact and a better structural bonding between the tire and the road. Furthermore, the trailing link and the toe link may intersect each other seen in the vertical direction.

The object of the topology of the lower rear link, the trailing link, the toe link and the upper camber links is to provide an instantaneous center of motion pattern of the tire-wheel assembly as defined by the topology of the wheel suspension to coincide with the instantaneous center of motion for the motion pattern of the wheel spindle housing and the tire-wheel assembly as defined by the topology of the wheel suspension as connected to the vehicle body and thus defined in a body fixed coordinate system to coincide with the instantaneous center of motion for the around the wheel spindle rotating tire-wheel assembly with a road contact defined as Homogeneous Contact Compression Interaction, where the tire-to-road contact is defined in a road fixed coordinate system. This instantaneous center of motion is thus as mentioned above a complex geometric function of instantaneous actions of motion of all suspension members of the wheel suspension considering that at any moment in time a vehicle with lateral acceleration toward the instantaneous turn center defined in a road fixed coordinate system and with the vehicle's all four tires with traction capability as a function of structural bonding during micro-seconds demands synchronization of the instantaneous actions of motion of all different suspension members of the wheel suspension to coincide with a common direction towards the vehicle's instantaneous turn center in a road fixed coordinate system. Thanks to the topology of the wheel suspension according to the invention, the inner wheel would have a function of instantaneous center of motion to move into a location at a position far outside the wheel as seen in the vehicle coordinate system and then in front of the wheel spindle at suspension rebound while the outer wheel would have a function of instantaneous center of motion to move into a location at a position far inside the wheel as seen in the vehicle coordinate system and then in the front of the wheel spindle at suspension bump with the inner and the outer wheels instantaneous centers of motion to coincide directionally with the vehicle's turn center as defined in a road fixed coordinate system. This topology is advantageous to meet the aspiration of a homogeneously distributed shear force pattern, which enables maximizing structural bonding over the entire tire contact patch during the extremely short time of duration of Van der Waals forces for all kinds of driving conditions.

The topology of the lower rear link, the trailing link, and the upper camber links provides a king pin location and inclination of a king pin axis such that the drive joint center will be located outboard the king pin axis where the king pin axis is the instantaneous axis at each moment around which the wheel spindle housing rotates as a result of the motion pattern given by the topology of the five interdependent control links.

The torque (Nm) pulsation (1/s) as the propelling power (Nm/s) pulsation could provide what is normally called torque-steer. This effect is for each left and right side caused by the propelling power pulsation from the drive shaft as giving an action-reaction effect such that the tire to road contact will give forces in the forward direction on the tire-wheel assembly and the control links in the wheel spindle housing position will give forces in the rearward direction on the tire-wheel assembly. This action-reaction effect for suspensions with no elasticity in the control links give a tendency towards toe-in, which effect can be minimized or even reversed towards toe-out by choice of topology and elastokinematics.

The object of the approach in this invention is to balance the forward propelling power pulsation from the engine through the transmission to the drive shafts, the drive joints to the wheel spindle over the tire-wheel assemblies to the road such that the above mentioned toe effects from suspension topology and elastokinematics will be balanced. The applied engine torque as transmitted over the drive-joint with a forward propelling force over the wheel bearing will have a reactive force from the wheel bearing to the wheel spindle such that the center of the drive joint, being flexible to steer in any direction, will turn the wheel spindle housing and the tire-wheel assembly towards desired counter acting toe. This balance of forces and moments is tuned from the freedom of choice of imaginary instantaneous center of upper camber links defining the king pin axis offset, the king pin axis angle and the imaginary instantaneous axis for king pin location relative to the center of the drive joint in order to generate maximized homogeneous "traction power" from "destructive interference"

The object is also achieved by the motor vehicle initially defined, which comprises a vehicle body and a wheel suspension as defined above.

### BRIEF DESCRIPTION OF THE DRAWINGS

The invention is now to be explained more closely by means of the description of various embodiments, given only by way of example, and with reference to the drawings attached hereto.
- Fig 1: shows schematically a perspective view of a motor vehicle indicating the six degrees of freedom of the vehicle.
- Fig 2: shows schematically a view from above of a motor vehicle having rear wheel suspension according to the invention.
- Fig 3: shows schematically a view from above of another motor vehicle having rear wheel suspension according to the invention.
- Fig 4: shows a view from above of a suspension device according to a first embodiment.
- Fig 5: shows a rear view of the suspension device in Fig 4.
- Fig 6: shows a side view of the suspension device in Fig 4.
- Fig 7: shows a view from above of a suspension device according to a second embodiment.
- Fig 8: shows a rear view of the suspension device in Fig 7.
- Fig 9: shows a side view of the suspension device in Fig 7.
- Fig 10: shows a rear view of a suspension device according to a third embodiment.
- Fig 11: shows a rear view of a suspension device according to a fourth embodiment.
- Figs 12-14: show views from above of the suspension device in Fig 7.
- Fig 15: shows a view from above of a suspension comprising a first and a second suspension device as shown in Fig 7.
- Fig 16: shows a king pin axis in the views of Figs 7 and 8.

### DETAILED DESCRIPTION OF VARIOUS EMBODIMENTS OF THE INVENTION

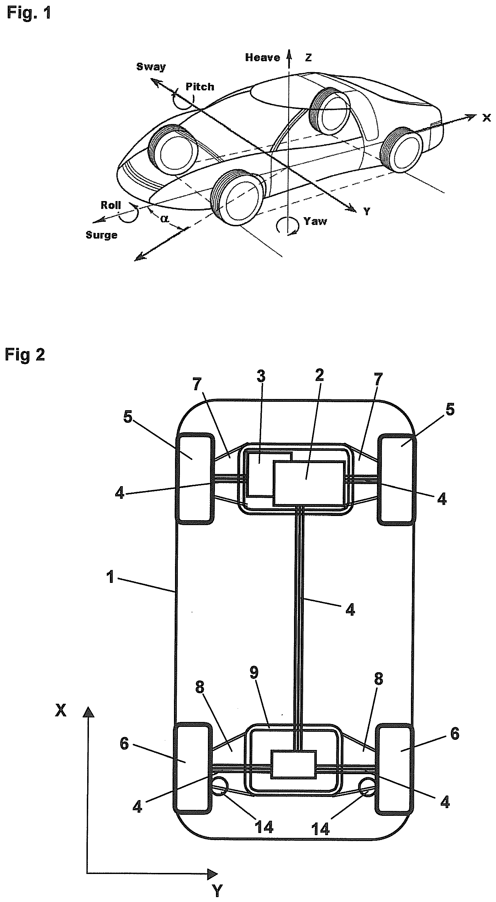

Fig 1 discloses the dynamics of a motor vehicle in six degrees of freedom denominated as follows:
Motion up and down = Heave;
Motion left and right = Sway;
Motion fore and aft = Surge;
Angular change around a horizontal lateral direction Y = Pitch;
Angular change around a vertical direction Z = Yaw; and
Angular change around a horizontal longitudinal direction X = Roll.

Fig 2 discloses a motor vehicle comprising a vehicle body 1 and an engine-transmission system, comprising an engine 2 and a transmission 3. The engine 2 is provided at the front of the motor vehicle. The transmission 3 comprises drive shafts 4. The motor vehicle has two wheel suspensions, one front wheel suspension for the front wheels 5, and one rear wheel suspension for the rear wheels 6. The drive shafts 4 connect the transmission 3 to the wheels 5, 6 with different driving configurations such as front-, rear- or all wheel drive of the motor vehicle. The front wheel suspension comprises a first suspension device 7 for the suspension of the right front wheel 5 and a second suspension device 7 for the suspension of the left front wheel 5. The rear wheel suspension comprises a first suspension device 8 for suspension of the right rear wheel 6 and a second suspension device 8 for suspension of the left rear wheel 6.

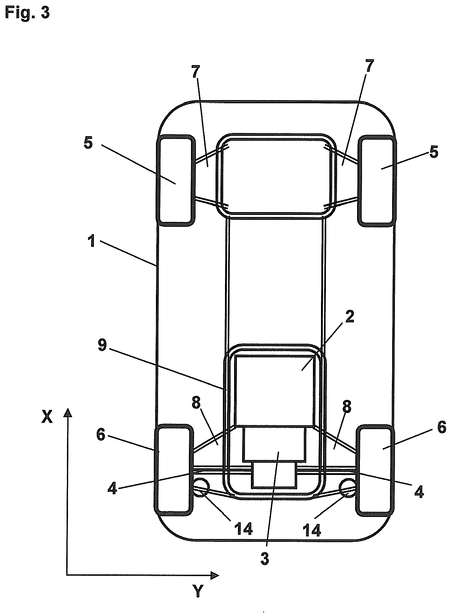

The motor vehicle also comprises a frame structure 9. In the embodiment disclosed in Fig 2, the frame structure 9 is directly connected to the vehicle body 1. The embodiment disclosed in Fig 3 differs from the embodiment disclosed in Fig 2 in that the frame structure 9 is directly connected to the engine-transmission system and in that the engine 3 is provided at a more center position of the motor vehicle forward of the transmission and rear wheel suspension, but rearward of the location of a driver.

The motor vehicle has, in a normal driving state forwardly, a normal driving direction, which coincides with the horizontal longitudinal direction X of the motor vehicle and is perpendicular to the horizontal lateral direction Y and to the vertical direction Z.

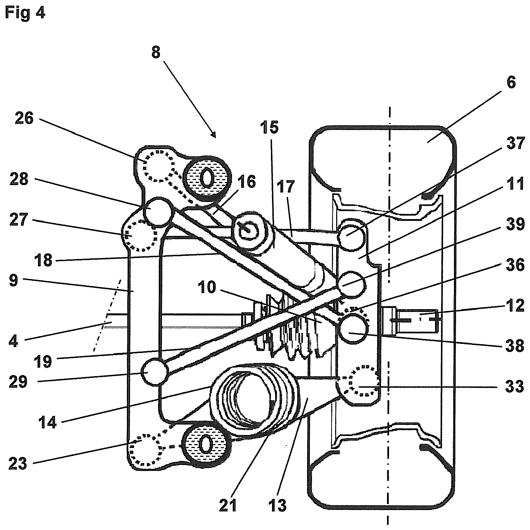

This invention refers to the wheel suspension for the rear wheels. Preferred embodiments of the rear wheel suspension are now to be explained with reference to Figs 4 - 10. It is to be noted that although the embodiments disclosed in the following refer to a motor vehicle with the rear wheels 6 being driven, the rear wheel suspension is also applicable to a motor vehicle with non-driven rear wheels such as a front wheel drive vehicle configuration.

Each suspension device 8 comprises a wheel spindle housing 11, adapted to support a wheel spindle 12 on which the rear wheel 6 is mounted. The wheel spindle 12 is connected to the associated drive shaft 4 at a drive joint center 10. The wheel spindle housing 11 and the wheel spindle 12 define a wheel center, i.e. the center of rotation of the wheel 6.

A vehicle spring 14 is provided for carrying the weight of the vehicle body 1, or a part of the weight of the vehicle body 1. The vehicle spring 14 is connected to the vehicle spring mass at one end. The vehicle spring 14 is at the other end connected, directly or indirectly, to the wheel spindle housing 11 via a spring attachment. The spring attachment is located rearwards the wheel spindle 12 along the longitudinal direction X with respect to the normal driving direction. Advantageously, the spring attachment is located below the wheel center with respect to the vertical direction Z.

Each suspension device 8 also comprises a plurality of interdependent control links, each extending between and connecting the frame structure 9 and the wheel spindle housing 11.

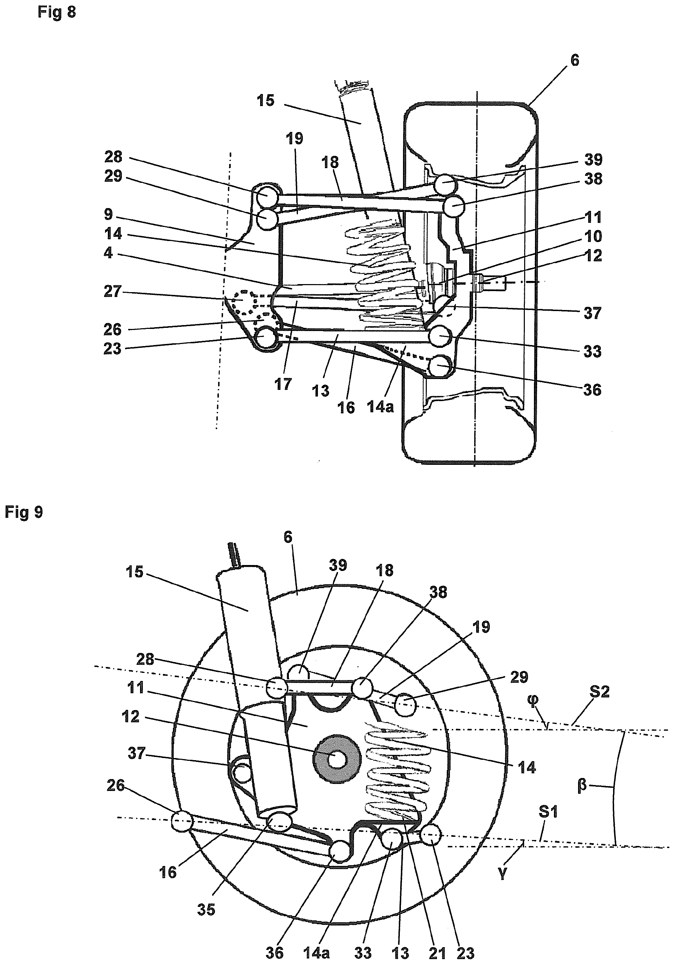

The plurality of interdependent control links comprises a lower rear link 13, see Figs 4-10. The lower rear link 13 is connected to the wheel spindle housing 11 by means of a lower rear link housing joint at a lower rear link housing position 33 and to the frame structure 9 by means of a lower rear link frame joint at a lower rear link frame position 23. The lower rear link housing position 33 and the lower rear link frame position 23 both are located below the wheel center with respect to the vertical direction Z, see Fig 8.

According to a first embodiment, see Figs 4 to 6, the lower rear link 13 carries the vehicle spring 14. The vehicle spring 14 is then connected to the lower rear link 13 at a lower rear link position 21 which is located rearwards the wheel spindle 12 to be supported by the wheel spindle housing 11 along the longitudinal direction X with respect to the normal driving direction. The spring attachment is in this embodiment formed by the lower rear link housing joint at a lower rear link housing position 33.

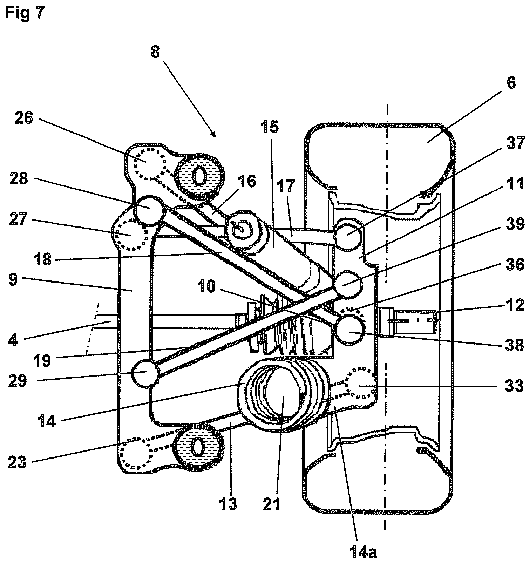

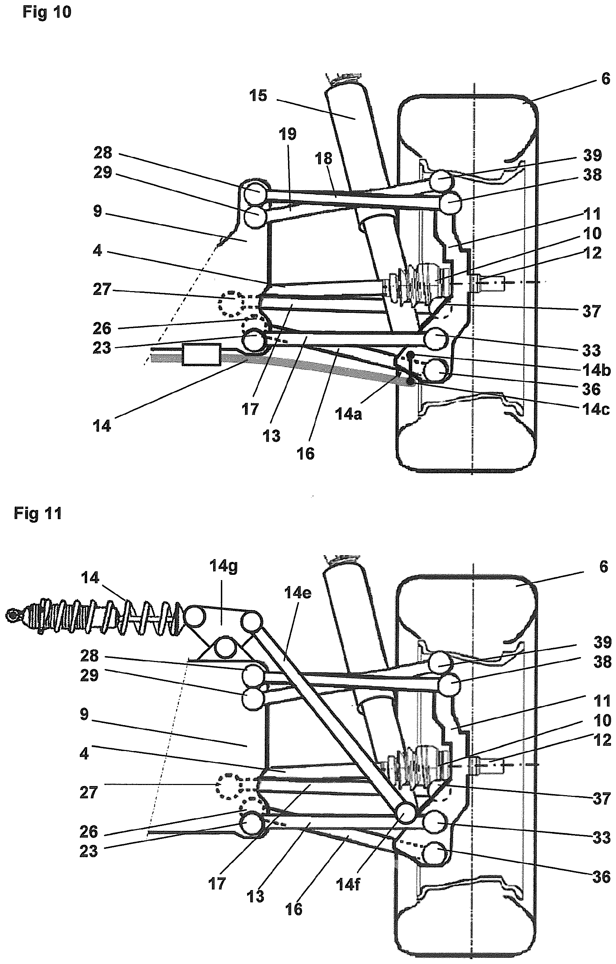

According to a second embodiment, see Figs 7 to 9, a spring attachment 14a connects directly on the wheel spindle housing 11. The lower rear link 13 then may extend below the spring attachment 14a with respect to the vertical direction Z, as can be seen in Figs 9 and 10. Furthermore, the lower rear link housing position 33 may be located beneath the spring attachment 14a, see Fig 9. In Fig 9 the lower rear link housing position 33 is provided straight beneath the spring attachment 14a along the longitudinal direction X with respect to the normal driving direction.

The vehicle spring 14 may comprise or consist of an axial compression spring, such as a gas spring, a coil spring, as illustrated in Figs 4 to 9, or a coil over shock, i.e. a coil spring arranged around a shock absorber element, as illustrated in Fig 11. It is to be noted that such a coil over spring does not necessarily exclude the shock absorber 15 to be explained more closely below. The vehicle spring 14 may also comprise or consist of a torsion bar or an active actuator.

According to a third embodiment, the vehicle spring 14 may comprise or consist of a leaf spring extending transversely to longitudinal direction X with respect to the normal driving direction, as illustrated in Fig 10. The spring attachment 14a may then comprise an attachment element having a first end 14b connected and rotatable in relation to the wheel spindle housing 11 and a second end 14c connected and rotatable in relation to the vehicle spring 14.

According to a fourth embodiment, the vehicle spring 14 may be provided to act on the spindle housing 11 via a push rod 14e as illustrated in Fig 11. The vehicle spring 14 extends, in the illustrated fourth embodiment, in a horizontal, or substantially horizontal plane, and more specifically in parallel, or substantially in parallel, to the lateral direction Y. The push rod 14e extends upwardly and inwardly and is at one end connected to the lower rear link 13 via a push rod joint 14f. The push rod joint 14f is located at a relatively small distance from the wheel spindle housing 11 and the lower rear link housing position 33, so that this arrangement ensures that the forces are transferred to the wheel spindle housing 11 via the lower rear link 13. Alternatively, the push rod 14e may, instead of being attached to the rear lower link 13, be directly connected to the wheel spindle housing 11. At the other end, the push rod 14e is connected to a pivoting connection member 14g via a joint. The pivoting connection member 14g is attached and pivots in relation to the frame structure 9, or it may be connected directly to the engine-transmission system. The pivoting connection member 14g pivots around an axis extending in parallel, or substantially in parallel, with the longitudinal direction X. The vehicle spring 14 is connected to the vehicle spring mass at one end and to the pivoting connection member 14g at the other end. It is to be noted that both the push rod 14e and the vehicle spring 14 may extend in different directions than those disclosed in Fig 11. The provision of the push rod 14e gives a freedom to locate the vehicle spring 14 in any suitable position and direction.

Each suspension device 8 also comprises a shock absorber 15, which is attached to the wheel spindle housing 11 via a shock absorber attachment 35. The shock absorber attachment 35 is provided at a position, which is located at a distance from the vehicle spring 14 and forwards the wheel spindle 12. The shock absorber attachment 35 is supported by the wheel spindle housing 11 along the longitudinal direction X with respect to the normal driving direction.

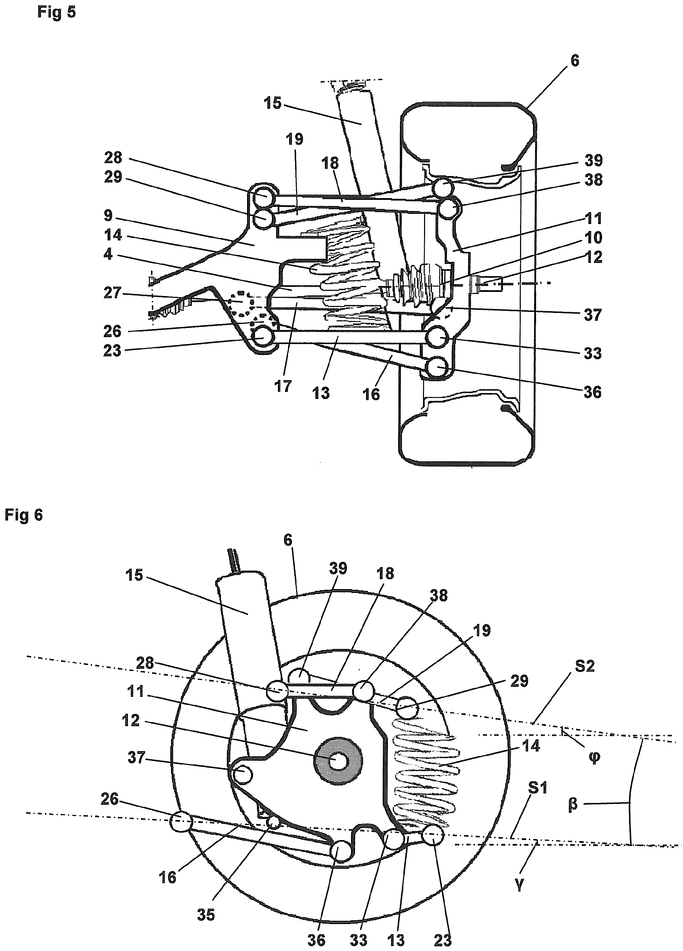

The plurality of control links of the suspension device 8 also comprises a trailing link 16, and a toe link 17. The trailing link 16 and the toe link 17 are operable to control the wheel spindle housing 11 to maintain the rear wheel 6 substantially in parallel with the longitudinal direction X. Both the trailing link 16 and the toe link 17 extend below the wheel spindle 12 with respect to the vertical direction Z, see Figs 5, 8 and 10.

More specifically, the trailing link 16 is operable to provide a super-ordinate function of controlling the motion of the wheel center in the longitudinal direction X, and a sub-ordinate function of controlling the wheel spindle housing 11 in such a manner that the rear wheel 6 is substantially parallel with the longitudinal direction X.

The toe link 17 is operable to provide a super-ordinate function of controlling the wheel spindle housing 11 in such a manner that the rear wheel 6 is substantially parallel with the longitudinal direction X.

The trailing link 16 is connected to the frame structure 9 by means of a trailing link frame joint at a trailing link frame position 26. The toe link 17 is connected to the frame structure 9 by means of a toe link frame joint at a toe link frame position 27. The trailing link 16 is connected to the wheel spindle housing 11 by means of a trailing link housing joint at a trailing link housing position 36. The toe link 17 is connected to the wheel spindle housing 11 by means of a toe link housing joint at a toe link housing position 37.

The trailing link frame position 26 is located forwards the wheel center and the wheel spindle 12, see Figs 4 and 7. The toe link frame position 27 is located either forwards, or may be located rearwards, the wheel center and the wheel spindle 12. Furthermore, both the trailing link housing position 36 and the toe link housing position 37 are located below the wheel center with respect to the vertical direction Z, see Figs 5, 8 and 10.

It should be noted that the trailing link housing position 36, according to an alternative embodiment, could be located more rearwards than disclosed in Figs 4 and 7. For instance, the trailing link 16 could extend to a trailing link housing position 36 straight beneath or substantially straight beneath the wheel center and the drive joint center 10, and behind the rear wheel center and the drive joint center 10 with respect to the normal forward drive direction.

However, as disclosed in Figs 4 - 10, the trailing link frame position 26 is located at a more forward position than the toe link frame position 27 along the longitudinal direction X with respect to the normal driving direction, whereas the trailing link housing position 36 is located at a more rearward position than the toe link housing position 37 along the longitudinal direction X. This means that the trailing link 16 and the toe link 17 will intersect each other seen in the vertical direction Z, as can be seen in Figs 4 and 7.

Furthermore, the plurality of control links of the suspension device 8 comprises a first upper camber link 18 and a second upper camber link 19. The first upper camber link 18 is connected to the frame structure 9 by means of a first camber frame joint at a first camber frame position 28. The second upper camber link 19 is connected to the frame structure 9 by means of a second camber frame joint at a second camber frame position 29. The first upper camber link 18 is connected to the wheel spindle housing 11 by means of a first camber housing joint at a first camber housing position 38. The second upper camber link 19 is connected to the wheel spindle housing 11 by means of a second camber housing joint at a second camber housing position 39.

The first camber frame position 28 is located at a more forward position than the second camber frame position 29 along the longitudinal direction X with respect to the normal driving direction. The first camber housing position 38 is located at a more rearward position than the second camber housing position 39 along the longitudinal direction X with respect to the normal driving direction. Consequently, the first upper camber link 18 and the second upper camber link 19 intersect each other seen in the vertical direction Z, see Figs 4 and 7.

Moreover, the first camber frame position 28 is located at a higher position than the second camber frame position 29 along the vertical direction Z, and the first camber housing position 38 is located at a lower position than the second camber housing position 39 along the vertical direction Z. Consequently, the first camber link 18 and the second camber link 19 also intersect each other seen in the longitudinal direction X, see Figs 5, 8 and 10.

The first camber housing position 38 and the second camber housing position 39 both are located above the wheel center and the wheel spindle 12 with respect to the vertical direction Z. More specifically, the first camber link 18 and the second camber link 19 are both located above the wheel spindle 12 with respect to the vertical direction Z.

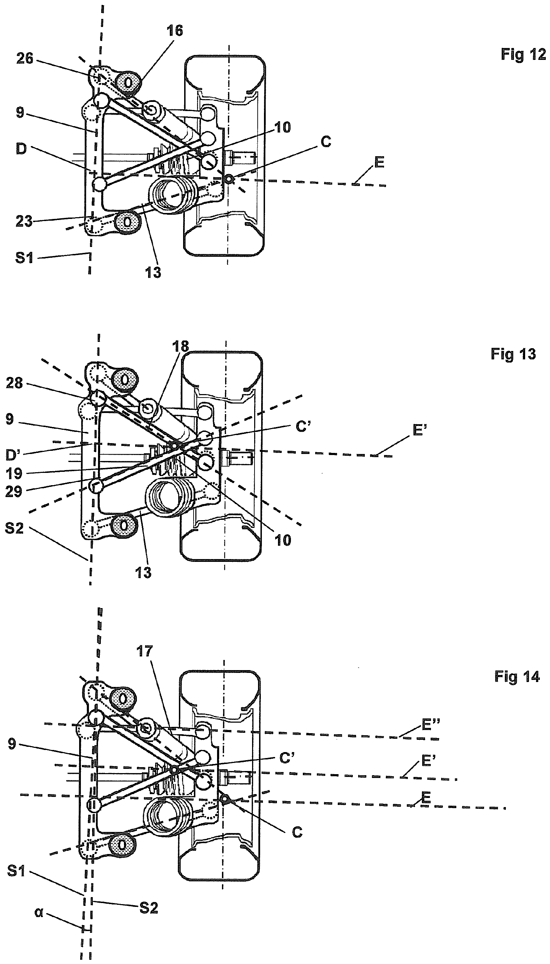

With reference to Figs 12-14, it can be seen that the trailing link 16 extends along or defines a longitudinal axis extending through the trailing link frame position 26 and the trailing link housing position 36. The lower rear link 13 extends along or defines a longitudinal axis extending through the lower rear link frame position 23 and the lower rear link housing position 33. These two control links 16 and 13 and their respective longitudinal axes meet in a common virtual lower point C as seen in the vertical direction, see Fig 12.

The trailing link 16 and the lower rear link 13 thus together form a virtual lower triangular link at a lower part of the spindle housing 11. The movement of the virtual lower point C is determined by a lower swing axis S1 of the lower triangular link, see Fig 13. The lower swing axis S1 extends through and is defined by the trailing link frame position 26 of the trailing link frame joint, and by the lower rear link frame position 23 of the lower rear link frame joint. For an infinitesimally small movement, the direction of this movement may be determined by any point along a first line E extending perpendicularly from a point D on the lower swing axis S1 and through the lower point C.

The first upper camber link 18 extends along or defines a longitudinal axis extending through the camber link frame position 28 and the camber link housing position 38. The second upper camber link 19 extends along or defines a longitudinal axis extending the camber frame link position 29 and the camber link housing position 39. These two control links 18 and 19 and their respective longitudinal axes meet in a common virtual upper point C', as seen in the vertical direction, see Fig 13. The first upper camber link 18 and the second upper camber link 19 thus together form a virtual upper triangular link at an upper part of the spindle housing 11. The movement of the virtual upper point C' is determined by an upper swing axis S2 of the virtual upper triangular link, see Figs 4 and 7. The upper swing axis S2 extends through and is defined by the first camber frame position 28 of the first camber frame joint, and by the second camber frame position 29 of the second camber frame joint. For an infinitesimally small movement, the direction of this movement may be determined by any point along a second line E' extending perpendicularly from a point D' on the upper swing axis S2 and through the upper point C'.

As can be seen in Fig 14, the upper swing axis S2 and the lower swing axis S1 form a first angle a to each other in a plane of the longitudinal direction X and the transversal direction Y, i.e. when seen in the vertical direction. The first angle α lies in the interval 0-5°, preferably in the interval 0-4°, more preferably in the interval 0-3°, and most preferably in the interval 0-2°. Furthermore, each of the upper swing axis S2 and the lower swing axis S1 is parallel, or approximately parallel with the longitudinal direction X, or forms a small angle with the longitudinal direction X in a plane of the longitudinal direction X and the transversal direction Y, i.e. when seen in the vertical direction. This small angle lies in the interval 0-5°, preferably in the interval 0-4°, more preferably in the interval 0-3°, and most preferably in the interval 0-2°.

The lower swing axis S1 and the upper swing axis S2 also form a second angle β to each other in a plane of the longitudinal direction X and the vertical direction Z, see Figs 6 and 9. The second angle β lies in the interval 1-8°, preferably in the interval 2-7°, more preferably in the interval 3-6°, and most preferably in the interval 3-5°.

The lower swing axis S1 and the upper swing axis S2 both slope downwardly and rearwardly in relation to the longitudinal direction X in the plane of the longitudinal direction X and the vertical direction Z, see Figs 6 and 9.

The lower swing axis S1 slopes downwardly and rearwardly with a third angle γ in relation to the longitudinal direction X in the plane of the longitudinal direction X and the vertical direction Z. The third angle γ lies in the interval 2-7°, preferably in the interval 3-5°, see Figs 6 and 9.

The upper swing axis S2 slopes downwardly and rearwardly with a fourth angle ϕ in relation to the longitudinal direction X in the plane of the longitudinal direction X and the vertical direction Z. The fourth angle (p lies in the interval 3-12°, preferably in the interval 4-11°, more preferably in the interval 5-10°, and most preferably in the interval 6-9°, see Figs 6 and 9.

The toe link 17 defines a third line E" swingably journalled in the frame structure 9, see Fig 14. As also can be seen in Fig 14, the first line E, the second line E' and the third line E" are parallel or approximately parallel to each other, or they may form a small angle in relation to each other, in a plane of the longitudinal direction X and the transversal direction Y, i.e. when seen in the vertical direction. Especially the first line E, being perpendicular to the swing axis S1, and the second line E', being perpendicular to the swing axis S2, may form a small angle, corresponding to the first angle α, to each other when seen in the vertical direction.

The instantaneous center of motion of the wheel spindle housing, to which the wheel and the tire is attached over the bearing and the wheel spindle, is obtained where the first line E, the second line E' and the third line E" converge, or theoretically cross each other, seen in the vertical direction, wherein the vertical direction is perpendicular to the road and thus the tire to road contact patch.

Since the lower swing axis S1 and the upper swing axis S2 form a relatively small angle to each other and have a small, or a very small, inclination from the longitudinal direction X, the instantaneous center of motion will be located at a position far outside the wheel 6 and then in the rear of the wheel spindle, as indicated by the lines E and E', or at a position far inside the wheel 6 and then in front of the wheel spindle.

As can be seen in the Figs 12-14 and 15, the instantaneous center of motion is located at a distance from the drive joint center 10 that is significantly longer than the lateral distance between the drive joint center 10 and the frame structure 9 along a lateral direction Y being perpendicular to the vertical direction Z and the longitudinal direction X.

Since the toe link 17 defines the third line E" swingably journalled in the frame structure 9 as can be seen in the Figs 12-14, the instantaneous center of motion of the wheel spindle housing 11 and the wheel and tire rotating in the wheel plane will coincide at a great distance from the wheel. This makes it possible to synchronize motion as defined by the topology as defined by the suspension in contact with the frame with the motion of the wheel and tire rotation around the wheel spindle where the tire is in contact with the road such that the desired maximization of structural bonding from a homogeneous distribution of the stresses is accomplished.

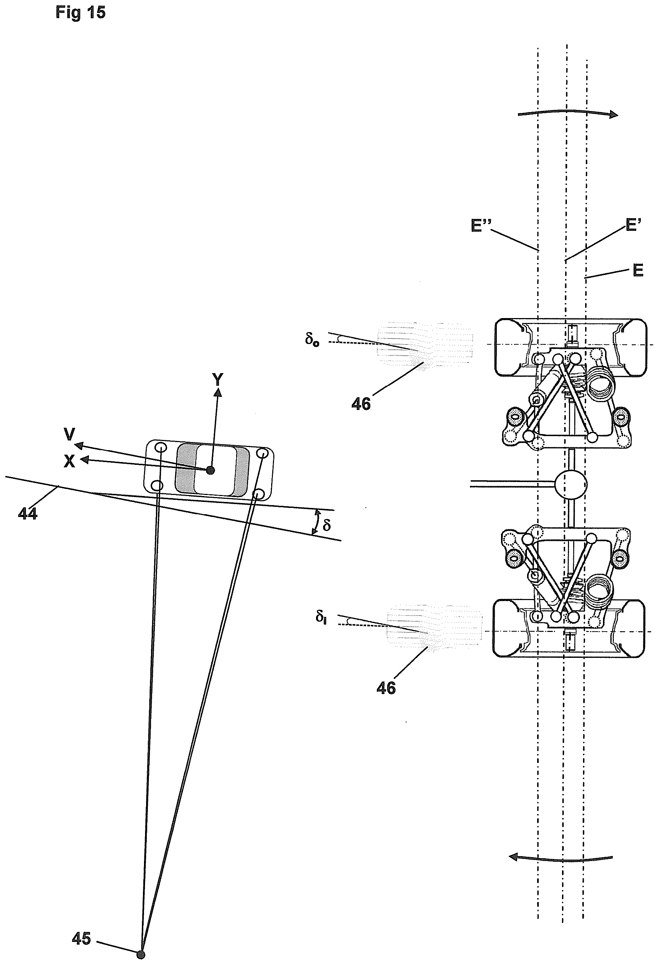

With reference to Fig 15 it can be explained that the first line E, during compression and prolongation of the vehicle spring 14, will be turned in such away that the first line E of the first suspension device 8 remains parallel, or approximately parallel, with the first line E of the second suspension device 8 during driving of the vehicle through curves. This means that the first line E of the first suspension device 8 at the right side will be turned slightly rearwards, toe-out, when the vehicle goes through a curve turning to the left, i.e. when the vehicle spring 14 is compressed, and that the first line E of the second suspension device 8 at the left side will be turned slightly forwards, toe-in, when for the same curve the vehicle spring 14 is prolonged.

Furthermore, the second line E', and the third line E", will, during compression and prolongation of the vehicle spring 14, be turned in a similar way as the first line E and in such away that the second line E', and the third line E", of the first suspension device remains parallel, or approximately parallel, with the second line E', and the third line E", of the second suspension device such that the first line E, the second line E' and the third line E" of the first and second suspension devices converge, or theoretically cross each other in a common center of action as the vehicle's turn center.

At any moment in time a vehicle with any level of lateral acceleration follows a path of an arc 44 with an instantaneous center of action 45 in a road fixed coordinate system. The radius of that arc 44 is changing, but at any instant all rotating tires should get a pattern of a tire contact patch 46 being synchronous with the path of the arc 44 defining the vehicles travel in a road fixed coordinate system.

Systems are robust for forces being applied in a center of action 45. The convoluted integral of all contact points in the tire contact patch 46 for each instant of time, provided by the synthesized actions from all control links with forces in pure pull and push are to be directed towards the vehicle's instantaneous turn center. This is advantageous for achieving "minimum power losses" and a homogeneous contact compression interaction for all driving conditions.

This demands that the cornering inner suspension device 8 will have a function of instantaneous center of motion to move into a location at a position far outside the wheel 6 as seen in the vehicle coordinate system and then in front of the wheel spindle 12 at suspension rebound and the cornering outer suspension device 8 will have a function of instantaneous center of motion to move in a location at a position far inside the wheel 6 as seen in the vehicle coordinate system and then in front of the wheel spindle 12 at suspension bump as defined by the lines E, E', E" to converge directionally towards the vehicle's instantaneous turn center as defined in a road fixed coordinate system.

This topology is advantageous to meet the aspiration of a homogeneously distributed shear force pattern, which enables maximizing structural bonding over the entire tire contact patch during the extremely short time of duration of Van der Waals forces for all kinds of driving conditions.

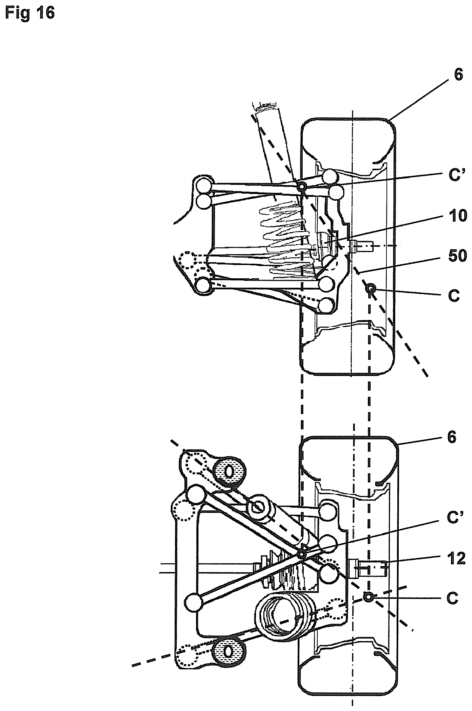

Fig 16 indicates a position, or an approximate position, of a king pin axis 50. The king pin axis 50 is the instantaneous axis at each moment around which the wheel spindle housing 11 rotates as a result of the motion pattern given by the topology of the five interdependent control links 13, 16, 17, 18 and 19.

The topology of the first and second camber links 18, 19 and the trailing link 16 and the lower rear link 13 together provide a king pin location and a king pin inclination of the king pin axis 50 from the freedom of choice of the virtual instantaneous centers C and C', see also Fig 12-14, such that the king pin axis 50 around which the longitudinal propelling moments and forces from the drive joint center 10 as well as from the propelling forces in the tire contact patch 46 provides desired action defined scientifically as "destructive interference" so as to control, the wheel spindle housing 11 in such a manner that the tire-wheel assembly is substantially parallel with the longitudinal direction X when propelling moments and forces are applied.

The trailing link housing position 36, for the trailing link 16, may as an alternative be located at a more forward position than straight beneath or substantially straight beneath the wheel center and the wheel spindle 12 with respect to the normal forward direction. The toe link housing position 37, for the toe link 17, may be located at more rearward position behind the wheel center and the wheel spindle 12 with respect to the normal forward driving direction. This means that the trailing link 16 and the toe link 17 are arranged not to intersect each other seen in the vertical direction Z. In this case, the toe link 17 and lower rear link 12 can be but do not have to be parallel with each other.

The present invention is not limited to the embodiments disclosed but may be varied and modified within the scope of the following claims.

## Claims

1. A wheel suspension adapted for the suspensions of the rear wheels of a motor vehicle having a vehicle body and an engine-transmission system, the wheel suspension defining a longitudinal direction (X) adapted to be parallel with the normal driving direction of the motor vehicle, a vertical direction (Z) being perpendicular to the longitudinal direction (X), and adapted to be vertical when the motor vehicle is in a normal driving state, and a transversal direction (Y) being perpendicular to the longitudinal direction (X) and the vertical direction (Z), the wheel suspension comprising a first suspension device (8) for a right rear wheel and a second suspension device (8) for a left rear wheel, each of the first and second suspension devices (8) comprising
a wheel spindle housing (11), adapted to support a wheel spindle (12) on which the rear wheel (6) is mountable and defining a wheel center,
a frame structure (9) adapted to be connected to the vehicle body (1) or the engine-transmission system (2,3),
a vehicle spring (14) arranged to carry the weight of the vehicle body,and
a plurality of control links, each extending between and connecting the frame structure (9) and the wheel spindle housing (11), wherein the plurality of control links comprises
- a lower rear link (13),
- a trailing link (16),
- a toe link (11),
- a first upper camber link (18), and
- a second upper camber link (19),
wherein the first upper camber link (18) and the second upper camber link (19) intersect each other seen in the vertical direction (Z),
wherein the trailing link (16) and the lower rear link (13) together form a virtual lower triangular link swingable about a lower swing axis (S1), and wherein the first camber link (18) and the second camber link (19) together form a virtual upper triangular link swingable about an upper swing axis (S2),
wherein the lower swing axis (S1) and the upper swing axis (S2) form a first angle (α) to each other in a plane of the longitudinal direction (X) and the transversal direction (Y), the first angle (α) lying in the interval 0-5°,
**characterized in that** the lower swing axis (S1) and the upper swing axis (S2) form a second angle (β) to each other in a plane of the longitudinal direction (X) and the vertical direction (Z), the second angle (β) lying in the interval 1-8°, and that the lower swing axis (S1 and the upper swing axis (S2) both slope downwardly and rearwardly in relation to the longitudinal direction (X) in the plane of the longitudinal direction (X) and the vertical direction (Z).

2. A wheel suspension according to claim 1, wherein the lower swing axis (S1) slopes downwardly and rearwardly with a third angle (γ) in relation to the longitudinal axis in the plane of the longitudinal direction (X) and the vertical direction (Z), wherein the third angle (γ) lies in the interval 2-7°.

3. A wheel suspension according to any one of claims 1 and 2, wherein the upper swing axis (S2) slopes downwardly and rearwardly with a fourth angle (ϕ) in relation to the longitudinal axis in the plane of the longitudinal direction (X) and the vertical direction (Z), wherein the fourth angle (ϕ) lies in the interval 3-12°.

4. A wheel suspension according to any one of the preceding claims, wherein the trailing link (16) and the lower rear link (13) intersect in a common virtual lower point (C) seen in the vertical direction (Z), and wherein a first line (E), extending perpendicularly from the lower swing axis (S1) and through the lower point (C), is turned during compression and prolongation of the vehicle spring (14) in such away that the first line (E) of the first suspension device remains approximately parallel with the first line (E) of the second suspension device during driving of the vehicle.

5. A wheel suspension according to any one of the preceding claims, wherein the first upper camber link (18) and the second upper camber link (19) intersect in a common virtual upper point (C') seen in the vertical direction (Z), and wherein a second line (E'), extending perpendicularly from the upper swing axis (S2) and through the upper point (C'), is turned during compression and prolongation of the vehicle spring (14) in such away that the second line (E') of the first suspension device remains approximately parallel with the second line (E') of the second suspension device during driving of the vehicle.

6. A wheel suspension according to any one of the preceding claims, wherein the toe link (17) defines a third line (E"), which extends perpendicularly from the upper swing axis (S2) seen in the vertical direction (Z) and is turned during compression and prolongation of the vehicle spring (14) in such away that the third line (E") of the first suspension device (8) remains approximately parallel with the third line (E") of the second suspension device (8) during driving of the vehicle.

7. A wheel suspension according to any one of the preceding claims, wherein the vehicle spring (14) is connected with the wheel spindle housing (11) via a spring attachment, and wherein the spring attachment is located rearwards the wheel spindle (12) along the longitudinal direction (X) with respect to the normal driving direction.

8. A wheel suspension according to claim 7, wherein the spring attachment (14a) connects directly on the wheel spindle.

9. A wheel suspension according to any one of the preceding claims, wherein the vehicle spring (14) acts on the wheel spindle housing (11) via a push rod (14e) and wherein the vehicle spring (14) is connected to the push rod (14e) via a pivoting connection member (14g).

10. A wheel suspension according to any one of the preceding claims, wherein the vehicle spring comprises or consists of a leaf spring extending transversely to longitudinal direction (X) with respect to the normal driving direction.

11. A wheel suspension according to any one of claims 9 and 10, wherein the spring attachment (14a) comprises an attachment element having a first end (14b) connected and rotatable in relation to the wheel spindle housing (11) and a second end (14c) connected and rotatable in relation to the vehicle spring (14).

12. A wheel suspension according to any one of the preceding claims, wherein the vehicle spring (14) is connected with the wheel spindle housing (11) via a spring attachment, and wherein the spring attachment is located rearwards the wheel spindle (12) along the longitudinal direction (X) with respect to the normal driving direction and wherein the wheel suspension comprises a shock absorber (15) which is attached to the wheel spindle housing (11) via a shock absorber attachment (35), and wherein the shock absorber attachment (35) is provided at a position which is located at a distance from the spring attachment and forwards the wheel spindle (12) to be supported by the wheel spindle housing (11) along the longitudinal direction (X) with respect to the normal driving direction.

13. A wheel suspension according to any one of the preceding claims, wherein the first upper camber link (18) and the second upper camber link (19) intersect each other seen in the longitudinal direction (X).

14. A motor vehicle comprising a vehicle body, an engine-transmission system and a wheel suspension according to any one of the preceding claims.

## Patentansprüche

1. Radaufhängung, die für die Aufhängungen der Hinterräder eines Kraftfahrzeugs geeignet ist, das einen Fahrzeugaufbau und ein Motor-Getriebe-System aufweist, wobei die Radaufhängung eine Längsrichtung (X) definiert, die dafür geeignet ist, parallel zur normalen Fahrtrichtung des Kraftfahrzeugs zu sein, eine vertikale Richtung (Z), die senkrecht zur Längsrichtung (X) ist und die dafür geeignet ist, vertikal zu sein, wenn sich das Kraftfahrzeug in einem normalen Fahrzustand befindet, und eine Querrichtung (Y), die senkrecht zur Längsrichtung (X) und zur vertikalen Richtung (Z) ist, wobei die Radaufhängung eine erste Aufhängevorrichtung (8) für ein rechtes Hinterrad und eine zweite Aufhängevorrichtung (8) für ein linkes Hinterrad umfasst, wobei jede der ersten und der zweiten Aufhängevorrichtung (8)
ein Achsschenkelgehäuse (11), das dafür geeignet ist, einen Achsschenkel (12) zu halten, an dem das Hinterrad (6) montierbar ist und der einen Radmittelpunkt definiert,
eine Rahmenstruktur (9), die dafür geeignet ist, mit dem Fahrzeugaufbau (1) oder dem Motor-Getriebe-System (2, 3) verbunden zu werden,
eine Fahrzeugfeder (14), die angeordnet ist, um das Gewicht des Fahrzeugaufbaus zu tragen, und
eine Vielzahl von Steuerungslenkern umfasst, die sich jeweils zwischen der Rahmenstruktur (9) und dem Achsschenkelgehäuse (11) erstrecken und diese miteinander verbinden, wobei die Vielzahl von Steuerungslenkern
- einen unteren hinteren Lenker (13),
- einen Längslenker (16),
- einen Vorspurlenker (17),
- einen ersten oberen Sturzlenker (18) und
- einen zweiten oberen Sturzlenker (19) umfasst,
wobei der erste obere Sturzlenker (18) und der zweite obere Sturzlenker (19) einander in vertikaler Richtung (Z) gesehen schneiden,
wobei der Längslenker (16) und der untere hintere Lenker (13) zusammen einen virtuellen unteren Dreieckslenker bilden, der um eine untere Schwingachse (S1) schwingen kann, und wobei der erste Sturzlenker (18) und der zweite Sturzlenker (19) zusammen einen virtuellen oberen Dreieckslenker bilden, der um eine obere Schwingachse (S2) schwingen kann,
wobei die untere Schwingachse (S1) und die obere Schwingachse (S2) in einer Ebene der Längsrichtung (X) und der Querrichtung (Y) zueinander einen ersten Winkel (α) bilden, wobei der erste Winkel (α) im Intervall von 0 bis 5° liegt, **dadurch gekennzeichnet, dass** die untere Schwingachse (S1) und die obere Schwingachse (S2) in einer Ebene der Längsrichtung (X) und der vertikalen Richtung (Z) zueinander einen zweiten Winkel (β) bilden, wobei der zweite Winkel (β) im Intervall von 1 bis 8° liegt, und dass die untere Schwingachse (S1) und die obere Schwingachse (S2) in der Ebene der Längsrichtung (X) und der vertikalen Richtung (Z) beide in Bezug auf die Längsrichtung (X) nach unten und hinten geneigt sind.

2. Radaufhängung nach Anspruch 1, wobei die untere Schwingachse (S1) in der Ebene der Längsrichtung (X) und der vertikalen Richtung (Z) in Bezug auf die Längsachse mit einem dritten Winkel (γ) nach unten und hinten geneigt ist, wobei der dritte Winkel (γ) im Intervall von 2 bis 7° liegt.

3. Radaufhängung nach einem der Ansprüche 1 und 2, wobei die obere Schwingachse (S2) in der Ebene der Längsrichtung (X) und der vertikalen Richtung (Z) mit einem vierten Winkel (ϕ) in Bezug auf die Längsachse nach unten und hinten geneigt ist, wobei der vierte Winkel (ϕ) im Intervall von 3 bis 12° liegt.

4. Radaufhängung nach einem der vorhergehenden Ansprüche, wobei der Längslenker (16) und der untere hintere Lenker (13) einander in vertikaler Richtung (Z) gesehen in einem gemeinsamen virtuellen unteren Punkt (C) schneiden und wobei eine erste Linie (E), die sich senkrecht ausgehend von der unteren Schwingachse (S1) und durch den unteren Punkt (C) erstreckt, während der Kompression und Verlängerung der Fahrzeugfeder (14) derart gedreht wird, dass die erste Linie (E) der ersten Aufhängevorrichtung während der Fahrt des Fahrzeugs annähernd parallel zur ersten Linie (E) der zweiten Aufhängevorrichtung bleibt.

5. Radaufhängung nach einem der vorhergehenden Ansprüche, wobei der erste obere Sturzlenker (18) und der zweite obere Sturzlenker (19) einander in vertikaler Richtung (Z) gesehen in einem gemeinsamen virtuellen oberen Punkt (C') schneiden und wobei eine zweite Linie (E'), die sich senkrecht ausgehend von der oberen Schwingachse (S2) und durch den oberen Punkt (C') erstreckt, während der Kompression und Verlängerung der Fahrzeugfeder (14) derart gedreht wird, dass die zweite Linie (E') der ersten Aufhängevorrichtung während der Fahrt des Fahrzeugs annähernd parallel zur zweiten Linie (E') der zweiten Aufhängevorrichtung bleibt.

6. Radaufhängung nach einem der vorhergehenden Ansprüche, wobei der Vorspurlenker (17) eine dritte Linie (E") definiert, die sich in vertikaler Richtung (Z) gesehen senkrecht ausgehend von der oberen Schwingachse (S2) erstreckt und während der Kompression und Verlängerung der Fahrzeugfeder (14) derart gedreht wird, dass die dritte Linie (E") der ersten Aufhängevorrichtung (8) während der Fahrt des Fahrzeugs annähernd parallel zur dritten Linie (E") der zweiten Aufhängevorrichtung (8) bleibt.

7. Radaufhängung nach einem der vorhergehenden Ansprüche, wobei die Fahrzeugfeder (14) über eine Federhalterung mit dem Achsschenkelgehäuse (11) verbunden ist und wobei die Federhalterung in Längsrichtung (X) in Bezug auf die normale Fahrtrichtung rückwärts von dem Achsschenkel (12) angeordnet ist.

8. Radaufhängung nach Anspruch 7, wobei die Federhalterung (14a) direkt an den Achsschenkel anschließt.

9. Radaufhängung nach einem der vorhergehenden Ansprüche, wobei die Fahrzeugfeder (14) über eine Schubstange (14e) auf das Achsschenkelgehäuse (11) einwirkt und wobei die Fahrzeugfeder (14) über ein Schwenkverbindungselement (14g) mit der Schubstange (14e) verbunden ist.

10. Radaufhängung nach einem der vorhergehenden Ansprüche, wobei die Fahrzeugfeder eine Blattfeder umfasst oder aus einer Blattfeder besteht, die sich in Bezug auf die normale Fahrtrichtung quer zur Längsrichtung (X) erstreckt.

11. Radaufhängung nach einem der Ansprüche 9 und 10, wobei die Federhalterung (14a) ein Befestigungselement umfasst, das Folgendes aufweist: ein erstes Ende (14b), das mit dem Achsschenkelgehäuse (11) verbunden ist und in Bezug auf dieses drehbar ist, und ein zweites Ende (14c), das mit der Fahrzeugfeder (14) verbunden ist und in Bezug auf diese drehbar ist.

12. Radaufhängung nach einem der vorhergehenden Ansprüche, wobei die Fahrzeugfeder (14) über eine Federhalterung mit dem Achsschenkelgehäuse (11) verbunden ist und wobei die Federhalterung in Längsrichtung (X) in Bezug auf die normale Fahrtrichtung rückwärts vom Achsschenkel (12) angeordnet ist und wobei die Radaufhängung einen Stoßdämpfer (15) umfasst, der über eine Stoßdämpferhalterung (35) an dem Achsschenkelgehäuse (11) befestigt ist und wobei die Stoßdämpferhalterung (35) an einer Position vorgesehen ist, die in einer Entfernung von der Federhalterung und in Längsrichtung (X) in Bezug auf die normale Fahrtrichtung vor dem durch das Achsschenkelgehäuse (11) zu haltenden Achsschenkel (12) angeordnet ist.

13. Radaufhängung nach einem der vorhergehenden Ansprüche, wobei der erste obere Sturzlenker (18) und der zweite obere Sturzlenker (19) einander in Längsrichtung (X) gesehen schneiden.

14. Kraftfahrzeug, umfassend einen Fahrzeugaufbau, ein Motor-Getriebe-System und eine Radaufhängung nach einem der vorhergehenden Ansprüche.

## Revendications

1. Suspension de roue adaptée pour la suspension des roues arrière d'un véhicule à moteur ayant une carrosserie de véhicule et un système de transmission de moteur, la suspension de roue définissant une direction longitudinale (X) adaptée pour être parallèle à la direction d'entraînement normale du véhicule à moteur, une direction verticale (Z) qui est perpendiculaire à la direction longitudinale (X) et adaptée pour être verticale lorsque le véhicule à moteur est dans un état d'entraînement normal, et une direction transversale (Y) qui est perpendiculaire à la direction longitudinale (X) et à la direction verticale (Z), la suspension de roue comprenant un premier dispositif de suspension (8) pour une roue arrière droite et un second dispositif de suspension (8) pour une roue arrière gauche, chacun des premier et second dispositifs de suspension (8) comprenant :
un logement de fusée de roue (11), adapté pour supporter une fusée de roue (12) sur lequel la roue arrière (6) peut être montée et définissant un centre de roue,
une structure de bâti (9) adaptée pour être raccordée à la carrosserie de véhicule (1) ou au système de transmission de moteur (2, 3),
un ressort de véhicule (14) agencé pour porter le poids de la carrosserie de véhicule, et
une pluralité de bielles de commande, chacune s'étendant entre et raccordant la structure de bâti (9) et le logement de fusée de roue (11), dans laquelle la pluralité de bielles de commande comprend :
une bielle arrière inférieure (13),
une bielle de fuite (16),
une bielle de pointe (17),
une première bielle de carrossage supérieure (18), et
une seconde bielle de carrossage supérieure (19),
dans laquelle la première bielle de carrossage supérieure (18) et la seconde bielle de carrossage supérieure (19) se coupent, observées dans la direction verticale (Z),
dans laquelle la bielle de fuite (16) et la bielle arrière inférieure (13) forment ensemble une bielle triangulaire inférieure virtuelle pouvant osciller autour d'un axe d'oscillation inférieur (S1), et dans laquelle la première bielle de carrossage (18) et la seconde bielle de carrossage (19) forment ensemble une bielle triangulaire supérieure virtuelle pouvant osciller autour d'un axe d'oscillation supérieur (S2),
dans laquelle l'axe d'oscillation inférieur (S1) et l'axe d'oscillation supérieur (S2) forment un premier angle (α) entre eux dans un plan de la direction longitudinale (X) et la direction transversale (Y), le premier angle (α) se trouvant dans l'intervalle de 0-5°,
**caractérisée en ce que** l'axe d'oscillation inférieur (S1) et l'axe d'oscillation supérieur (S2) forment un deuxième angle (β) entre eux dans un plan de la direction longitudinale (X) et la direction verticale (Z), le deuxième angle (β) se trouvant dans l'intervalle 1-8°, et **en ce que** l'axe d'oscillation inférieur (S1) et l'axe d'oscillation supérieur (S2) s'inclinent tous deux vers le bas et vers l'arrière par rapport à la direction longitudinale (X) dans le plan de la direction longitudinale (X) et de la direction verticale (Z).

2. Suspension de roue selon la revendication 1, dans laquelle l'axe d'oscillation inférieur (S1) s'incline vers le bas et vers l'arrière avec un troisième angle (γ) par rapport à l'axe longitudinal dans le plan de la direction longitudinale (X) et la direction verticale (Z), dans laquelle le troisième angle (γ) se trouve dans l'intervalle 2-7°.

3. Suspension de roue selon l'une quelconque des revendications 1 et 2, dans laquelle l'axe d'oscillation supérieur (S2) s'incline vers le bas et vers l'arrière avec un quatrième angle (ϕ) par rapport à l'axe longitudinal dans le plan de la direction longitudinale (X) et de la direction verticale (Z), dans laquelle le quatrième angle (ϕ) se trouve dans l'intervalle 3-12°.

4. Suspension de roue selon l'une quelconque des revendications précédentes, dans laquelle la bielle de fuite (16) et la bielle arrière inférieure (13) se coupent en un point inférieur virtuel commun (C) observé dans la direction verticale (Z) et dans laquelle une première ligne (E) s'étendant perpendiculairement à partir de l'axe d'oscillation inférieur (S1) et à travers le point inférieur (C), est pivotée pendant la compression et le prolongement du ressort de véhicule (14) de sorte que la première ligne (E) du premier dispositif de suspension reste approximativement parallèle à la première ligne (E) du second dispositif de suspension pendant l'entraînement du véhicule.

5. Suspension de roue selon l'une quelconque des revendications précédentes, dans laquelle la première bielle de carrossage supérieure (18) et la seconde bielle de carrossage (19) se coupent en un point supérieur virtuel commun (C') observé dans la direction verticale (Z), et dans laquelle une deuxième ligne (E'), s'étendant perpendiculairement à partir de l'axe d'oscillation supérieur (S2) et à travers le point supérieur (C'), est pivotée pendant la compression et le prolongement du ressort de véhicule (14) de sorte que la deuxième ligne (E') du premier dispositif de suspension reste approximativement parallèle à la deuxième ligne (E') du second dispositif de suspension pendant l'entraînement du véhicule.

6. Suspension de roue selon l'une quelconque des revendications précédentes, dans laquelle la bielle de pointe (17) définit une troisième ligne (E") qui s'étend perpendiculairement à partir de l'axe d'oscillation supérieur (S2) observé dans la direction verticale (Z) et est pivotée pendant la compression et le prolongement du ressort de véhicule (14) de sorte que la troisième ligne (E") du premier dispositif de suspension (8) reste approximativement parallèle à la troisième ligne (E") du second dispositif de suspension (8) pendant l'entraînement du véhicule.

7. Suspension de roue selon l'une quelconque des revendications précédentes, dans laquelle le ressort de véhicule (14) est raccordé au logement de fusée de véhicule (11) via une fixation de ressort, et dans laquelle la fixation de ressort est positionnée vers l'arrière de la fusée de roue (12) le long de la direction longitudinale (X) par rapport à la direction d'entraînement normale.

8. Suspension de roue selon la revendication 7, dans laquelle la fixation de ressort (14a) se raccorde directement sur la fusée de roue.

9. Suspension de roue selon l'une quelconque des revendications précédentes, dans laquelle le ressort de véhicule (14) agit sur le logement de fusée de roue (11) via une tige de poussée (14e) et dans laquelle le ressort de véhicule (14) est raccordé à la tige de poussée (14e) via un élément de raccordement pivotant (14g).

10. Suspension de roue selon l'une quelconque des revendications précédentes, dans laquelle le ressort de véhicule comprend ou se compose d'un ressort à lames s'étendant transversalement par rapport à la direction longitudinale (X) par rapport à la direction d'entraînement normale.

11. Suspension de roue selon l'une quelconque des revendications 9 et 10, dans laquelle la fixation de ressort (14a) comprend un élément de fixation ayant une première extrémité (14b) raccordée et pouvant tourner par rapport au logement de fusée de roue (11) et une seconde extrémité (14c) raccordée à et pouvant tourner par rapport au ressort de véhicule (14).

12. Suspension de roue selon l'une quelconque des revendications précédentes, dans laquelle le ressort de véhicule (14) est raccordé avec le logement de fusée de roue (11) via une fixation de ressort, et dans laquelle la fixation de ressort est positionnée vers l'arrière de la fusée de roue (12) le long de la direction longitudinale (X) par rapport à la direction d'entrée normale et dans laquelle la suspension de roue comprend un amortisseur (15) qui est fixé sur le logement de fusée de roue (11) via une fixation d'amortisseur (35) et dans laquelle la fixation d'amortisseur (35) est prévue dans une position qui est positionnée à une distance de la fixation de ressort et vers l'avant de la fusée de roue (12) pour être supportée par le logement de fusée de roue (11) le long de la direction longitudinale (X) par rapport à la direction d'entraînement normale.

13. Suspension de roue selon l'une quelconque des revendications précédentes, dans laquelle la première bielle de carrossage supérieure (18) et la seconde bielle de carrossage supérieure (19) se coupent, observées dans la direction longitudinale (X).

14. Véhicule à moteur comprenant une carrosserie de véhicule, un système de transmission de moteur et une suspension de roue selon l'une quelconque des revendications précédentes.
